# EUROPÄISCHE PATENTSCHRIFT

(11) **EP 1 274 267 B1**
(45) Veröffentlichungstag und Bekanntmachung des Hinweises auf die Patenterteilung: **29.11.2006**
(21) Anmeldenummer: 02014312.9
(22) Anmeldetag: 27.06.2002
(51) Int. Cl.: H04Q 7/32, G06F 1/00

(54) **Fernaktivierungsverfahren für Programme**
Method for remote program activation
Procédé d'activation de logiciel à distance

(30) Priorität: 06.07.2001 DE 10132296
(43) Veröffentlichungstag der Anmeldung: 08.01.2003
(73) Patentinhaber: ATX Europe GmbH, 40549 Düsseldorf (DE)
(72) Erfinder: Schulz, Werner, 40670 Meerbusch (DE); Sroczynski, Andrea, 47269 Duisburg (DE); Yilmaz, -zg-r, 40724 Hilden (DE); Schlopsna, Paul, 40597 Düsseldorf (DE)
(74) Vertreter: Weisse, Renate

(56) Entgegenhaltungen:
- WO-A-02/42899
- US-A- 5 790 664
- US-A- 5 956 505

## Beschreibung

### Technisches Gebiet

Die Erfindung betrifft ein Verfahren zur Aktivierung und/oder Deaktivierung von Programmen bzw. Programmbestandteilen oder Daten mit einem Schlüssel- bzw. Berechtigungscode, wobei
a) die Programme bzw. Programmbestandteile oder Daten in einer *ersten* prozessorgestützten Verarbeitungseinheit abgearbeitet und/oder bereitgestellt werden, welche mit einem Mobilfunkendgerät eines Mobilfunknetzes gekoppelt ist,
b) der *zweite* Schlüssel- bzw. Berechtigungscode über das Mobilfunknetz von einer zweiten Verarbeitungseinheit an das Mobilfunkendgerät versendet wird,
c) welche den Schlüssel- bzw. Berechtigungscode an die Verarbeitungseinheit zum Aktivieren und/oder Deaktivieren der Programme bzw. Programmbestandteile oder Daten weiterleitet, wobei
*d) eine Identifizierung eines Endanwenders über Teilnehmerdaten, die auf der SIM-Karte des Mobilfunkendgeräts gespeichert sind, erfolgt und die zweite Verarbeitungseinheit welche in das Mobilfunknetz integriert ist, den zweiten Schlüssel- bzw. Berechtigungscode an das Mobilfunkendgerät des Endanwender sendet.*

### Stand der Technik

Programme, Programmbestandteile sowie sonstige Daten unterliegen dem Urheberrecht. Wer beispielsweise ein Computerprogramm im Laden ersteht, der kauft lediglich, wie bei einem Buch, eine Lizenz für dieses Exemplar. Dies stellt den Verkäufer solcher Programme oft vor das Problem, dem Kunden komplexe Programme, wie z.B. CAD-Programme, mit ihrer gesamten Funktionsvielfalt - das sind nicht selten viele tausend Funktionen, über die die Programme verfügen - vorführen zu können. Der Kunde möchte schließlich nicht ein Produkt kaufen, bei dem er nicht genau weiß, wofür es ist und was für Funktionen es aufweist. Er möchte bei einem Kauf wissen, ob das Programm seinen Wünschen entspricht und für ihn geeignet ist. Es werden daher verschiedene Methoden angewandt, um die Programme dem Kunden vorzustellen.

Eine Methode besteht darin, daß der Verkäufer ein Programm zum Ausprobieren dem Kunden aushändigt und bei Nichtgefallen der Kunde das Programm zurückbringt. Jedoch wird die Verpackung der Programme nicht selten dabei beschädigt. Weiterhin muß das Kundenvertrauen sehr groß sein, denn die Erfahrung zeigt, daß von den Programmen wiederholt Kopien für die unerlaubte Nutzung angefertigt und weiterverbreitet werden. Hierdurch entstehen große wirtschaftliche Schäden.

Es ist bekannt, für diesen Fall einen Kopierschutz dem Programm beizufügen, so daß das Kopieren des Programmes möglichst erschwert wird. Da Programme derzeit in der Regel über CD-Roms verbreitet werden, können auf den CD-Roms spezielle Schutzmechanismen vorgesehen sein, so daß ein Kopieren durch Brennen unmöglich wird.

Eine andere bekannte Schutzmöglichkeit für Programme besteht darin, daß ein bestimmter Berechtigungscode von dem Programm abgefragt wird, wenn der Nutzer das Programm in Benutzung nehmen möchte. Der Berechtigungscode wird dem Kunden beim Kauf des Programmes mitgegeben. Dieser Berechtigungscode ist nur für den Lizenznehmer bestimmt. Leider kann sich fast jeder für fast alle Programme solche Berechtigungscode aus dem Internet auf seinen Computer herunterladen und für seine Raubkopie verwenden.

Um jedoch die potentiellen Kunden auf ihre neuesten Programme aufmerksam zu machen, werden häufig "abgespeckte" Demonstrationsprogramme kostenlos zur Verfügung gestellt. Die "abgespeckten" Programme funktionieren meistens genauso, wie die Vollversionen. Es werden lediglich einige wichtige Funktionen, wie beispielsweise das Speichern oder Drucken von Daten, deaktiviert. Andere Demonstrationsprogramme haben den vollen Funktionsumfang und sind jedoch nur für einen bestimmten Zeitraum nutzbar.

Die Demonstrationsprogramme werden auf Datenträgern, wie CD-Roms, verteilt oder können z.B. aus dem Internet auf den Computer des Kunden heruntergeladen werden. Eine Vielzahl dieser Demonstrationsprogramme verfügt grundsätzlich über den Programmcode ihrer Vollversionen, bei denen der gesamte Funktionsumfang zur Verfügung steht. Es sind lediglich bei den Demonstrationsprogrammen einige Funktionen gesperrt. Durch diese Demonstrationprogramme kann der Kunde die Programme ausprobieren, um die Funktionsvielfalt kennenzulernen, aber doch nicht im normalen Umfang einsetzen.

Die Demonstrationsprogramme lassen sich oftmals mit einem Berechtigungscode zu einer Vollversion umwandeln. Der Kunde muß dazu einen Kaufpreis bezahlen und er erhält dafür diesen Berechtigungscode. Dieser Berechtigungscode kann beispielsweise per Fax, elektronischer Nachricht (Email) oder Post an den Kunden versandt werden. Um das Programm schließlich freizuschalten, gibt der Kunde lediglich den Berechtigungscode in eine dafür vorgesehene Eingabemaske. Die gesperrten Funktionen werden ebenfalls nutzbar.

Es ist bekannt, Programme über das Internet freizuschalten. Hierzu ist die Internetseite des Programmanbieters mit einem "Browser" aufzurufen, um damit das Programm für einen Benutzer zu registrieren. Dem Anwender wird anschließend ein geeigneter Aktivierungscode übermittelt.

Navigationssysteme für Fahrzeuge, wie beispielsweise Kraftfahrzeuge, Flugzeuge und Schiffe, benötigen Daten und Kartenmaterial, um angeben zu können, wo sich das Fahrzeug befindet. Das Kartenmaterial befindet sich meist auf einer CD-Rom, welche von der Rechnereinheit des Navigationssysterns ausgelesen und ausgewertet wird. Wenn der Kunde eine CD-Rom mit Kartenmaterial beispielsweise für Deutschland kauft, dann kann er innerhalb Deutschlands das Navigationssystem einsetzen. Außerhalb dieser Grenzen funktioniert das System nicht, obwohl der Hersteller auch anderes Kartenmaterial auf der CD-Rom abgespeichert hat. Diese Kartendaten wurden bewußt gesperrt. Sie sind nur gegen eine gewisse Lizenzgebühr nutzbar. Diese Kartendaten können ganz oder auch nur teilweise, wie bei den Demonstrationsprogrammen, nach Zahlung der Lizenzgebühr an den Hersteller mit einem Berechtigungscode aktiviert werden.

Es sind weiterhin Funknetze bekannt, mit denen direkt ein Mobilfunkendgerät oder eine mit einem Mobilfunkendgerät gekoppelte Arbeitseinheit, z.B. ein tragbarer Computer oder ein Navigationssystem, angefunkt werden können. Mit Hilfe dieser Systeme lassen sich über die "Luftschnittstelle" insbesondere digitale Daten an jeden beliebigen Ort des Funknetzes versenden. Das Mobilfunkendgerät dient als Empfangs- und ggf. als Sendeeinheit und der Computer als Sendeeinheit. Diese Funknetze sind bereits flächendeckend in allen besiedelten und teilweise auch unbesiedelten Gebieten vorhanden. Dieses Funknetz eignet sich insbesondere dafür, Dienste, wie beispielsweise Verkehrsservice, Hotelführer oder Wettervorhersage, anzubieten. Derzeit sind in Europa solche Funknetze im GSM-Standard (=Global System Mobile) verbreitet.

Die vorgenannten Verfahren zum Freischalten bzw. Aktivieren ihrer Programme und Daten sind für die Anwender recht umständlich. Zunächst muß er registriert werden, um anschließend einen digitalen Schlüssel oder Berechtigungscode zum Freischalten zu erhalten. Außerdem sollten in den Programmen gesonderte Schutzatgoriuimen vorgesehen sein, die ein mehrmaliges Verwenden desselben Codes verhindern. Ansonsten, so zeigt die Erfahrung, sind über das Medium Internet sehr leicht solche Berechtigungscodes zu erhalten. Es sind daher nur aufwendige programmtechnische Verfahren bekannt, um solche Daten zu schützen.

Die US-Patentschrift 5,956,505 offenbart ein Verfahren, bei dem Programme bzw. Teile von Programmen oder Hardware insbesondere über ein Mobilfunknetz freigeschaltet werden. Dies erfolgt, indem ein Datenzentrum einen Aktivierungscode an das Gerät übermittelt, welches das zu aktivierende Programm oder die zu aktivierende Hardware enthält. Das Datenzentrum generiert hierzu einen Aktivierungscode. Eine Authentifizierung des Gerätenutzers bzw. Programms erfolgt beispielsweise über ein Passwort. *Der Aktivierungscode wird zur Aktivierung eines Programms vom Nutzer mit der Hand* über eine Tastatur eingegeben.

### Offenbarung der Erfindung

Aufgabe der Erfindung ist es, ein einfaches Verfahren zu schaffen, um Programme bzw. Programmbestandteile oder Daten für eine Nutzung *sicher zu aktivieren und*/*oder deaktivieren.*

Erfindungsgemäß wird die Aufgabe dadurch gelöst, daß bei einem Verfahren zur Aktivierung und/oder Deaktivierung von Programmen bzw. Programmbestandteilen oder Daten mit einem Schlüssel- bzw. Berechtigungscode der eingangs genannten Art
*e) zu jedem Programm bzw. Programmbestandteilen oder Daten jeweils ein individuelles Paar Berechtigungscodes generiert wird, wobei*
   - *der erste Berechtigungscode mit dem Programm bzw. Programmbestandteilen oder Daten weitergegeben wird und*
   - *der zweite Berechligungscode an die zweite zentrale Verarbeitungseinheit übergeben wird, welche den Berechtigungscode an die erste Verarbeitungseinheit weiterleitet,*
   - *wobei ein durch Vergleich und Feststellung von Übereinstimmung der Berechtigungscodes eine Aktivierung und*/*oder Deaktivierung von Programm bzw. Programmbestandteilen oder Daten erfolgt.*

Die Erfindung beruht auf dem Prinzip Funknetze zu nutzen, um Programme, sowie Daten und dergleichen, die auf irgendwelchen Verarbeitungseinheiten gespeichert sind, für eine Benutzung zu aktivieren und/oder zu deaktivieren. Da die gängigsten Funknetze die für Mobilfunkendgeräte sind, werden diese vorwiegend erwähnt und sind als vorteilhafte Ausgestaltung der vorliegenden Erfindung zu sehen. Die vorliegende Erfindung soll sich aber nicht nur auf diese beschränken.

Viele Mobilfunkendgeräte lassen sich an Verarbeitungseinheiten, wie Navigationssystem oder tragbare Computer, anschließen, so daß sie alle eine Empfangseinheit mit Luftschnittstelle aufweisen. Aufgrund der Vereinbarungen zur Standardisierung von Funknetzen für Mobilfunkendgeräte, insbesondere nach dem GSM- bzw. UMTS-Standard (=Global System Mobile bzw. Universal Mobile Telecommunications System), läßt sich jeder Teilnehmer durch das Mobilfunkendgerät eindeutig identifizieren. Der Teilnehmer muß dazu nämlich eine Identifikationskarte (SIM-Karte) in das Mobilfunkendgerät einsetzen. Eine Registrierung für das Programm erfolgt ggf. somit über die Teilnehmerdaten, die auf der SIM-Karte gespeichert sind. Soll ein Programm oder sollen entsprechende Daten freigeschaltet werden, ist es also nur notwendig den Schlüssel- bzw. Berechtigungscode über das Funknetz an den bestimmten Teilnehmer, der zuvor identifiziert wurde, zu versenden.

Der Nutzer der zu aktivierenden Programme oder Daten hat keinen direkten Zugriff auf die übermittelten - in der Regel digitale - Schlüssel- bzw. Berechtigungscode. Die Verarbeitungseinheit kann die Schlüssel- bzw. Berechtigungscode-Daten direkt auslesen und die Programme oder Daten aktivieren. Analog können natürlich auch Programme oder Daten deaktiviert werden.

Als vorteilhafte Ausgestaltung der Erfindung hat sich erwiesen, wenn die Schlüssel- bzw. Berechtigungscode von einer zweiten Verarbeitungseinheit, welche in das Funknetz integriert ist, verarbeitet und verwaltet werden. Hiermit kann ein Dienst der Funknetzanbieter zum Aktivieren und/oder Deaktivieren von Programmen oder Daten aufgebaut werden, der sicher und jederzeit verfügbar ist. Vorteilhafterweise weist die zweite Verarbeitungseinheit eine Versendeeinrichtung zur Versendung der Schlüssel- bzw. Berechtigungscodes auf, um diese über das Funknetz weiterzuleiten. In einer vorteilhaften Ausgestaltung wird jeder Schlüssel- bzw. Berechtigungscode über eine zentrale Versendeeinrichtung des Funknetzes an die Empfangseinheit versendet.

In einer bevorzugten Ausgestaltung der Erfindung kann auch eine zeitbezogene Aktivierung bzw. Deaktivierung der Programme, Programmbestandteile oder Daten erfolgen. Dies erlaubt es beispielsweise, ein Programm nur für einen bestimmten Zeitraum zu aktivieren. Erst wenn erneut eine Lizenzgebühr bezahlt wurde, wird das Programm freigeschaltet.

Eine weitere bevorzugte Ausführung des erfindungsgemäßen Verfahrens ergibt sich durch Verwendung von Sendeeinheiten, so daß eine bidirektionale Kommunikation zwischen der ersten und zweiten Verarbeitungeinheit erfolgen kann. Hierdurch können beispielsweise bestimmte Daten oder auch neue Programmversionen zwischen den beiden Verarbeitungseinheiten ausgetauscht werden. In einer besonders geeigneten Ausführung der Erfindung kann beispielsweise die erste Verarbeitungseinheit den Schlüssel- bzw. Berechtigungscode bei der zweiten Verarbeitungseinheit anfordern.

Eine vorteilhafte Ausgestaltung des erfindungsgemäßen Verfahrens ergibt sich, wenn der Schlüssel- bzw. Berechtigungscode verschlüsselt versendet wird. Damit wird das Versenden solcher Schlüssel- bzw. Berechtigungscode zum Aktivieren und/oder Deaktivieren von Programmen auch für unbefugten Abgriff möglichst erschwert.

Um gegebenenfalls eine Kontrolle der Vorgänge durchführen zu können, erfolgt eine Überwachung der Aktivierung bzw. Deaktivierung. Vorteilhafterweise wird die Überwachung dann zentral durchgeführt.

Durch die zentrale Erzeugung der Schlüssel- bzw. Berechtigungscode wird eine Konzentration der Verfahrensschritte des erfindungsgemäßen Verfahrens begünstigt und damit insgesamt vereinfacht.

Weitere Vorteile ergeben sich aus dem Gegenstand der Unteransprüche und werden unter Bezugnahme auf die Zeichnung erläutert.

### Kurze Beschreibung der Zeichnung

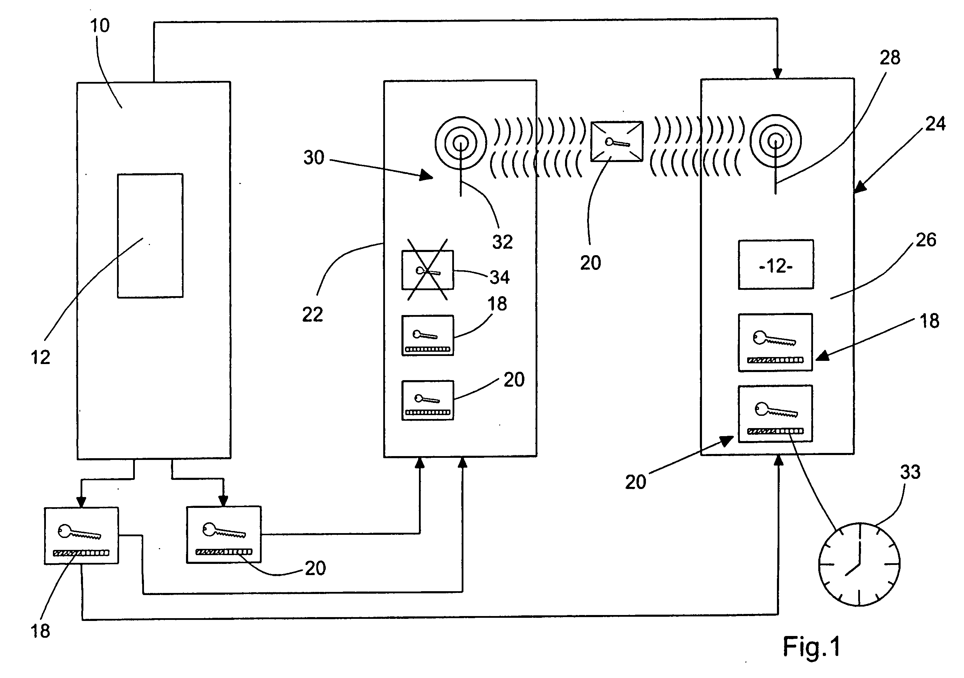

- Fig. 1: zeigt in einer Schemazeichnung ein Beispiel eines erfindungsgemäßen Verfahrens.

### Bevorzugtes Ausführungsbeispiel

Fig. 1 zeigt in einer schematischen Veranschaulichungsskizze ein Beispiel für den Ablauf eines erfindungsgemäßen Verfahrens. Mit 10 wird ein Anbieter von Programmen, Programmbestandteilen oder sonstigen Daten bezeichnet. Der Einfachheit halber wird im folgenden nur von Programmen 12 gesprochen. Gemeint können aber auch Programmbestandteile oder sonstige Daten, wie beispielsweise Kartenmaterial, sein.

Der Anbieter 10 generiert zu jedem Programm 12 jeweils ein individuelles Paar Berechtigungscode 18, 20. Der Berechtigungscode 18 wird mit dem Programm 12 weitergegeben. Der andere Berechtigungscode 20 wird neben dem Berechtigungscode 18 an eine zentrale Verarbeitungseinheit 22 übergeben, die die Berechtigungscode 18, 20 verwaltet und überwacht. Das Programm 12 wird beim Endanwender 24 in einer mobilen Verarbeitungseinheit 26 verarbeitet. Das Programm 12 steht auf der mobilen Verarbeitungseinheit 26 jedoch nur beschränkt zur Verfügung. Die mobile Verarbeitungseinheit 26 ist mit einem Mobilfunkendgerät 28 als Empfangs- und Sendeeinheit für eine bidirektionale Kommunikation mit einem Funknetz 30 gekoppelt. Die zentrale Verarbeitungseinheit 22 ist in das Funknetz 30 ebenfalls mit einer Empfangs- und Sendeeinheit 32 in der Regel stationär integriert.

Wenn der Endanwender 24 das Programm 12 jedoch im vollen Umfang nutzen möchte, benötigt er den Berechtigungscode 20. Der Endanwender 24 muß ggf. eine Bedingung, wie Zahlung einer Lizenzgebühr, erfüllen, um diesen Berechtigungscode 20 zu erhalten. Hat er diese Bedingung erfüllt, so übermittelt die zentrale Verarbeitungseinheit 22 den Berechtigungscode 20 in verschlüsselter Form über das Funknetz 30. Ein Decodieralgorithmus entschlüsselt den Berechtigungscode 20. Anschließend wird der Berechtigungscode 18 mit dem übermittelten Berechtigungscode 20 verglichen. Stimmen die Berechtigungscode 18, 20 überein, wird das Programm 12 im vollen Umfang nutzbar.

Damit der Berechtigungscode 12 an die richtige Adresse gelangt, muß sich der Endanwender 24 im Funknetz 30 identifizieren. Die Identifizierung erfolgt über die SIM-Karte die in jedem Mobilfunkendgerät zur Identifizierung vorhanden sein muß. An diese Adresse wird der Berechtigungscode 12 beispielsweise als Kurznachricht (SMS=Small Message Service) gesendet.

Die Berechtigungscode 18, 20 lassen sich ggf. auch abstufen, so daß nur bestimmte Programmteile des gesamten Programms 12 nutzbar werden. Ein Berechtigungscode 18, 20 besteht beispielsweise aus einer Bitfolge von 12 Bit. Die Anzahl der Bits ist grundsätzlich beliebig und nur von der notwendigen Speicherkapazität abhängig. Die Aktivierung bestimmter Programmteile kann beispielsweise dadurch geschehen, daß nur die ersten Bits, beispielsweise 6 Bits, übereinstimmen müssen. Je mehr Bits jedoch übereinstimmen, desto mehr Funktionen des Programms 12 werden schließlich freigeschaltet.

In dem Berechtigungscode 20 kann ferner ein Zeitlimit 33 eingefügt werden, das angibt, wie lange das Programm 12 nutzbar ist. Bei jedem Aufruf des Programms 12 durch die mobile Verarbeitungseinheit 26 wird überprüft, ob das Zeitlimit 33 erreicht wurde oder nicht. Wenn das Zeitlimit erreicht wird, wird das Programm automatisch ganz oder teilweise deaktiviert.

Grundsätzlich besteht aber auch die Möglichkeit, das Zeitlimit zentral in der zentralen Verarbeitungseinheit 22 zu verwalten. Wenn ein vorgegebenes Zeitlimit erreicht ist, wird ein Deaktivierungscode 34 von der zentralen Verarbeitungseinheit 22 über das Funknetz 30 an die mobile Verarbeitungseinheit gesendet. Dieser Deaktivicrungscode 34 deaktiviert das Programm 12.

Der zum Programm 12 zugehörige Berechtigungscode 20 wird automatisch durch die mobile Verarbeitungseinheit 26 von der zentralen Verarbeitungseinheit 22 angefordert. Liegt eine Freigabebestätigung der zentralen Verarbeitungseinheit 22 vor, beispielsweise weil eine Lizenzgebühr bezahlt wurde, so versendet sie über das Funknetz 30 den Berechtigungscode 12 an die mobile Verarbeitungseinheit 26. Das Programm 12 wird aktiviert.

## Patentansprüche

1. Verfahren zur Aktivierung und/oder Deaktivierung von Programmen bzw. Programmbestandteilen oder Daten (12) mit einem Schlüssel- bzw. Berechtigungscode (18, 20), wobei
a) die Programme bzw. Programmbestandteile oder Daten in einer *ersten* prozessorgestützten Verarbeitungseinheit (26) abgearbeitet und/oder bereitgestellt werden, welche mit einem Mobilfimkendgerät (28) eines Mobilfunknetzes (30) gekoppelt ist,
b) der *zweite* Schlüssel- bzw. Berechtigungscode (20) über das Mobilfunknetz (30) von einer zweiten Verarbeitungseinheit (22) an das Mobilfunicendgerät (28) versendet wird,
c) welche den zweiten Schlüssel- bzw. Berechtigungscode (20) an die Verarbeitungseinheit (26) zum Aktivieren und/oder Deaktivieren der Programme bzw. Programmbestandteile oder Daten (12) weiterleitet, wobei
d) eine Identifizierung eines Endanwenders über Teilnehmerdaten, die auf der SIM-Karte des Mobilfunkendgeräts (28) gespeichert sind, erfolgt und die zweite Verarbeitungseinheit (22), welche in das Mobilfunknetz (30) integriert ist, den *zweiten* Schlüssel- bzw. Berechtigungscode (20) an das Mobilfunkendgerät (28) des Endanwender sendet,
**dadurch gekennzeichnet, dass**
e) zu jedem Programm bzw. Programmbestandteilen oder Daten (12) jeweils ein individuelles Paar Berechtigungscodes (18, 20) generiert wird, wobei
- der *erste* Berechtigungscode (18) mit dem Programm bzw. Programmbestandteilen oder Daten (12) weitergegeben wird und
- der *zweite* Berechtigungscode (20) an *die zweite* zentrale Verarbeitungseinheit (22) übergeben wird, welche den Berechtigungscode (20) an die *erste* Verarbeitungseinheit (26) weiterleitet,
- wobei ein durch Vergleich und Feststellung von Übereinstimmung der Berechtigungscodes (18, 20) eine Aktivierung und/oder Deaktivierung von Programm bzw. Programmbestandteilen oder Daten (12) erfolgt.

2. Verfahren zur Aktivierung und/oder Deaktivierung von Programmen bzw. Programmbestandteilen oder Daten mit einem Schlüssel- bzw. Berechtigungscode (*18, 20*) nach Anspruch 1, **dadurch gekennzeichnet, daß** die Schlüssel- bzw. Berechtigungscode (*18, 20*) von der zweiten Verarbeitungseinheit (22), verarbeitet und verwaltet werden.

3. Verfahren zur Aktivierung und/oder Deaktivierung von Programmen bzw. Programmbestandteilen oder Daten mit einem Schlüssel- bzw. Berechtigungscode *(18, 20)* nach Anspruch 1 oder 2, **dadurch gekennzeichnet, daß** der Schlüssel- bzw. Berechtigungscode (20) über eine zweite zentrale Versendeeinrichtung (22, 32) des Mobilfunlrnetzes (30) an das Mobilfunlcendgerät (28) versendet wird.

4. Verfahren zur Aktivierung und/oder Deaktivierung von Programmen bzw. Programmbestandteilen oder Daten mit einem Schlüssel- bzw. Berechtigungscode (*18, 20*) nach einem der Ansprüche 1 bis 3, **dadurch gekennzeichnet, daß** eine zeitbezogene Aktivierung bzw. Deaktivierung erfolgt.

5. Verfahren zur Aktivierung und/oder Deaktivierung von Programmen bzw. Programmbestandteilen oder Daten mit einem Schlüssel- bzw. Berechtigungscode (*18, 20*) nach einem der Ansprüche 1 bis 4, **dadurch gekennzeichnet, daß** Sendeeinheiten vorgesehen sind, so daß eine bidirektionale Kommunikation zwischen der ersten (26) und zweiten (22) Verarbeitungseinheit erfolgen kann.

6. Verfahren zur Aktivierung und/oder Deaktivierung von Programmen bzw. Programmbestandteilen oder Daten mit einem Schlüssel- bzw. Berechtigungscode (*18, 20*) nach einem der Ansprüche 1 bis 5, **dadurch gekennzeichnet, daß** die erste Verarbeitungseinheit (26) den zweiten Schlüssel- bzw. Berechtigungscode (*20*) bei der zweiten Verarbeitungseinheit (22) anfordert.

7. Verfahren zur Aktivierung und/oder Deaktivierung von Programmen bzw. Programmbestandteilen oder Daten mit einem Schlüssel- bzw. Berechtigungscode (*18, 20*) nach einem der vorherigen Ansprüche, **dadurch gekennzeichnet, daß** der zweite Schlüssel- bzw. Berechtigungscode (*20*) verschlüsselt versendet wird.

8. Verfahren zur Aktivierung und/oder Deaktivierung von Programmen bzw. Programmbestanäteilen oder Daten mit einem Schlüssel- bzw. Berechtigungscode (*18, 20*) nach einem der Ansprüche 1 bis 7, **dadurch gekennzeichnet, daß** eine Überwachung der Aktivierung bzw. Deaktivierung erfolgt.

9. Verfahren zur Aktivierung und/oder Deaktivierung von Programmen bzw. Programmbestandteilen oder Daten mit einem Schlüssel- bzw. Berechtigungscode (*18, 20*) nach Anspruch 8, **dadurch gekennzeichnet, daß** die Überwachung zentral erfolgt.

10. Verfahren zur Aktivierung und/oder Deaktivierung von Programmen bzw. Programmbestandteilen oder Daten mit einem Schlüssel- bzw. Berechtigungscode (*18, 20*) nach einem der Ansprüche 1 bis 9, **dadurch gekennzeichnet, daß** der Schlüssel- bzw. Berechtigungscode (*18, 20*) zentral erzeugt wird.

## Claims

1. Method for activating and/or deactivating of programs, parts of programs or data (12) with a key- or access code (18, 20), wherein
(a) the programs, parts of programs or data are processed and/or provided in a first processor supported processing unit (26), which is coupled to a mobile station (28) of a mobile network (30),
(b) the second key- or access code (20) is sent through the mobile network (30) from a second processing unit (22) to the mobile station (28)
(c) which forward the second key- or access code (20) to the processing unit (26) for activating and/or deactivating of the programs, parts of programs or data (12), wherein
(d) an identification of an end user is carried out by means of user data which are stored on the SIM-card of the mobile station (28) and the second processing unit (22) which is integrated in the mobile network (30) sends the second key- or access code (20) to the mobile station (28) of the end user,
**characterised in that**
e) for each program, parts of a program or data (12) an individual pair of access codes (18, 20) is generated, wherein
- the first access code (18) with the program, parts of a program or data (12) is forwarded and
- the second access code (20) is transferred to the second central processing unit (22) which forwards the access code (20) to the first processing unit (26),
- wherein an activation and/or deactivation of the program, parts of a program or data (12) is effected by comparing and stating the coincidence of the access codes (18, 20).

2. Method for activating and/or deactivating of programs, parts of programs or data with a key- or access code (18, 20) according to claim 1, **characterised in that** the key- or access code (18, 20) is processed and administered by the second processing unit (22).

3. Method for activating and/or deactivating of programs, parts of programs or data with a key- or access code (18, 20) according to any of claims 1 or 2, **characterised in that** the key or access code (20) is sent to the mobile station (28) through a second central sending unit (22, 32).

4. Method for activating and/or deactivating of programs, parts of programs or data with a key- or access code (18, 20) according to any of claims 1 to 3, **characterised in that** a time related activation or deactivation is effected.

5. Method for activating and/or deactivating of programs, parts of programs or data with a key- or access code (18, 20) according to any of claims 1 to 4, **characterised in that** sending units are provided that a bidirectional communication between the first (26) and second (22) processing unit can be established.

6. Method for activating and/or deactivating of programs, parts of programs or data with a key- or access code (18, 20) according to any of claims 1 to 5, **characterised in that** the first processing unit (26) requests the second key- or access code (20) from the second processing unit (22).

7. Method for activating and/or deactivating of programs, parts of programs or data with a key- or access code (18, 20) according to any of the foregoing claims, **characterised in that** the second key- or access code (20) is sent in coded form.

8. Method for activating and/or deactivating of programs, parts of programs or data with a key- or access code (18, 20) according to any of claims 1 to 7, **characterised in that** the activating and/or deactivating is monitored.

9. Method for activating and/or deactivating of programs, parts of programs or data with a key- or access code (18, 20) according to claim 8, **characterised in that** the monitoring is centrally carried out.

10. Method for activating and/or deactivating of programs, parts of programs or data with a key- or access code (18, 20) according to any of claims 1 to 9, **characterised in that** the generation of the key- or access code (18, 20) is centrally carried out.

## Revendications

1. Procédé destiné à activer et/ou désactiver des programmes ou composants de programme ou des données (12) à l'aide d'un code chiffré ou code d'autorisation (18, 20),
(a) les programmes ou composants de programme ou les données étant traités et/ou mis à disposition dans une première unité de traitement (26) assistée par processeur qui est couplée à un terminal de radiotéléphonie mobile (28) d'un réseau de radiotéléphonie mobile (30),
(b) le second code chiffré ou code d'autorisation (20) est envoyé par l'intermédiaire du réseau de radiotéléphonie mobile (30) d'une seconde unité de traitement (22) au terminal de radiotéléphonie mobile (28),
(c) qui transmet le second code chiffré ou code d'autorisation (20) à l'unité de traitement (26) afin d'activer et/ou désactiver les programmes ou composants de programme ou les données (12),
(d) une identification d'un utilisateur final étant effectuée par l'intermédiaire de données d'utilisateur mémorisées sur la carte SIM du terminal de radiotéléphonie mobile (28), et la seconde unité de traitement (22) intégrée dans le réseau de radiotéléphonie mobile (30) envoyant le second code chiffré ou code d'autorisation (20) au terminal de radiotéléphonie mobile (28) de l'utilisateur final,
**caractérisé en ce que**
(e) une paire individuelle de codes d'autorisation (18, 20) est générée à chaque fois pour chaque programme ou composant de programme ou chaque donnée (12),
- le premier code d'autorisation (18) étant transmis avec le programme ou les composants de programme ou les données (12) et
- le second code d'autorisation (20) étant remis à la seconde unité centrale de traitement (22) qui transmet le code d'autorisation (20) à la première unité de traitement (26),
- une activation et/ou désactivation du programme ou des composants de programme ou des données (12) étant effectuée en comparant et établissant une concordance des codes d'autorisation (18, 20).

2. Procédé destiné à activer et/ou désactiver des programmes ou composants de programme ou des données à l'aide d'un code chiffré ou code d'autorisation (18, 20) selon la revendication 1, **caractérisé en ce que** les codes chiffré ou codes d'autorisation (18, 20) sont traités et gérés par la seconde unité de traitement (22).

3. Procédé destiné à activer et/ou désactiver des programmes ou composants de programme ou des données à l'aide d'un code chiffré ou code d'autorisation (18, 20) selon la revendication 1 ou 2, **caractérisé en ce que** le code chiffré ou code d'autorisation (20) est envoyé au terminal de radiotéléphonie mobile (28) par l'intermédiaire d'un second dispositif central d'expédition (22, 32) du réseau de radiotéléphonie mobile (30).

4. Procédé destiné à activer et/ou désactiver des programmes ou composants de programme ou des données à l'aide d'un code chiffré ou code d'autorisation (18, 20) selon l'une quelconque des revendications 1 à 3, **caractérisé en ce qu'**une activation ou désactivation temporelle est effectuée.

5. Procédé destiné à activer et/ou désactiver des programmes ou composants de programme ou des données à l'aide d'un code chiffré ou code d'autorisation (18, 20) selon l'une quelconque des revendications 1 à 4, **caractérisé en ce que** des unités d'expédition sont prévues de sorte à pouvoir assurer une communication bidirectionnelle entre la première (26) et la seconde (22) unité de traitement.

6. Procédé destiné à activer et/ou désactiver des programmes ou composants de programme ou des données à l'aide d'un code chiffré ou code d'autorisation (18, 20) selon l'une quelconque des revendications 1 à 5, **caractérisé en ce que** la première unité de traitement (26) exige de la seconde unité de traitement (22) le second code chiffré ou code d'autorisation (20).

7. Procédé destiné à activer et/ou désactiver des programmes ou composants de programme ou des données à l'aide d'un code chiffré ou code d'autorisation (18, 20) selon l'une quelconque des revendications précédentes, **caractérisé en ce que** le second code chiffré ou code d'autorisation (20) est codé lorsqu'il est envoyé.

8. Procédé destiné à activer et/ou désactiver des programmes ou composants de programme ou des données à l'aide d'un code chiffré ou code d'autorisation (18, 20) selon l'une quelconque des revendications 1 à 7, **caractérisé en ce qu'**une surveillance de l'activation ou désactivation est effectuée.

9. Procédé destiné à activer et/ou désactiver des programmes ou composants de programme ou des données à l'aide d'un code chiffré ou code d'autorisation (18, 20) selon la revendication 8, **caractérisé en ce que** la surveillance est effectuée de façon centralisée.

10. Procédé destiné à activer et/ou désactiver des programmes ou composants de programme ou des données à l'aide d'un code chiffré ou code d'autorisation (18, 20) selon l'une quelconque des revendications 1 à 9, **caractérisé en ce que** le code chiffré ou code d'autorisation (18, 20) est généré de façon centralisée.
